(19) Europäisches Patentamt / European Patent Office / Office européen des brevets

(11) **EP 3 505 410 B1**

(12) **EUROPEAN PATENT SPECIFICATION**

(45) Date of publication and mention
of the grant of the patent:
**05.08.2020 Bulletin 2020/32**

(51) Int Cl.:
*B60W 10/02* (2006.01)    *B60W 10/06* (2006.01)
*B60W 10/08* (2006.01)    *B60W 10/10* (2012.01)
*B60W 10/26* (2006.01)    *B60W 30/188* (2012.01)
*B60W 20/30* (2016.01)    *B60W 20/10* (2016.01)
*B60W 20/13* (2016.01)

(21) Application number: **18213673.9**

(22) Date of filing: **18.12.2018**

(54) **METHOD FOR EFFICIENT MANAGEMENT AND CONTROL OF A HYBRID PROPULSION SYSTEM**

VERFAHREN ZUR EFFIZIENTEN VERWALTUNG UND STEUERUNG EINES
HYBRIDANTRIEBSSYSTEMS

PROCÉDÉ DE GESTION ET DE COMMANDE EFFICACES D'UN SYSTÈME DE PROPULSION
HYBRIDE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.12.2017 IT 201700150493**

(43) Date of publication of application:
**03.07.2019 Bulletin 2019/27**

(73) Proprietor: **Magneti Marelli S.p.A.**
**20011 Corbetta (MI) (IT)**

(72) Inventors:
• **AURILIO, Gianluca**
  **I-40134 BOLOGNA (IT)**
• **CAROSATI, Paolo**
  **I-40134 BOLOGNA (IT)**
• **DENTICI, Ignazio**
  **I-40134 BOLOGNA (IT)**
• **SUGLIA, Rosanna**
  **I-40134 BOLOGNA (IT)**

(74) Representative: **Brunazzi, Stefano**
**Jacobacci & Partners S.p.A.**
**Via Senato, 8**
**20121 Milano (IT)**

(56) References cited:
**WO-A2-2011/033529    US-A1- 2005 256 623
US-A1- 2005 256 631    US-B2- 8 103 397**

**Description**

TECHNOLOGICAL BACKGROUND OF THE INVENTION

Field of application.

The present invention relates to the technical field of methods and electronic systems for controlling hybrid propulsion systems for vehicles.

In particular, the invention relates to a method for efficiently managing and controlling a hybrid propulsion system comprising at least one electric powertrain provided with an electric motor and a thermal powertrain provided with an internal combustion engine.

Description of the prior art.

In the field of the control and management of hybrid propulsion vehicles, several methods are known which aim at optimizing the combined and/or alternating operation of the electric unit and of the thermal unit.

In particular, some solutions are known based on maximizing the efficiency of the electric motor or of the thermal engine or, preferably, based on calculating an overall efficiency of the hybrid system and maximizing such overall efficiency.

However, in light of the complexity of the hybrid powertrain system and the mutually very different operating characteristics of the electric motor and the thermal engine, the need is felt to identify even better methods for optimizing efficiency.

In addition, a hybrid propulsion system management based either exclusively or primarily on maximizing a total operational efficiency has several drawbacks.

Among the drawbacks, there is the fact that the electric motor tends to operate with a higher efficiency than the thermal engine. So, a management based on the total efficiency of the propulsion system inherently tends to encourage the use of the electric motor to the detriment of the thermal engine, with negative consequences in terms of battery consumption and reducing the average State of Charge of the battery itself.

On the other hand, if the use of the thermal engine is imposed in presence of a low State of Charge (SOC) of the battery, one runs the risk of making the entire system, and the thermal engine in particular, work in very inefficient conditions, with negative consequences particularly in terms of fuel consumption.

The need is therefore particularly felt for a method for managing and controlling the operation of a hybrid propulsion system which aims at making the system operate in good efficiency conditions, but also in view of a more comprehensive consideration of the performance of the hybrid propulsion system.

In other words, the need is felt to find a management method which achieves a better overall balance between the objectives of maximizing efficiency, preserving and extending the duration of the battery and optimizing fuel consumption. The known solutions, in this respect, do not fully satisfy the requirements mentioned above.

The U.S. Patent US 8 103 397 B2 describes a method for optimizing powertrain efficiency for a vehicle. The International Patent Application WO 2011/033529 A2 discloses a motor assistance for a hybrid vehicle based on user input.

The U.S. Patent Application US 2005/256623 A1 relates to a method for dynamically determining peak output torque within battery constraints in a hybrid transmission including a parallel hybrid split. The U.S. Patent Application US 2005/256631 A1 describes a method of determining engine output power in a hybrid electric vehicle.

SUMMARY OF THE INVENTION

It is an object of the present invention to provide a method for efficiently managing and controlling a hybrid propulsion system which can at least in part solve the drawbacks described above with reference to the prior art and respond to the aforesaid needs particularly felt in the considered technical sector.

In particular, the present invention aims at providing a method for managing and controlling the operation of a hybrid propulsion system capable of ensuring a better overall balance between the objectives of efficiency maximization, preservation and duration of the battery and optimization of fuel consumption.

Such an object is achieved by means of a method for managing and controlling the operation of a hybrid propulsion system according to claim 1.

Further embodiments of the method are defined in claims 2-15.

BRIEF DESCRIPTION OF THE DRAWINGS

Further features and advantages of the method for managing and controlling the operation of a hybrid propulsion system will be apparent from the following description which illustrates preferred embodiments, given by way of indicative, non-limiting examples, with reference to the accompanying figures, in which:

- figure 1 illustrates by means of a simplified diagram an example of a hybrid propulsion system, and respective control, to which the management and control method of the present invention is applied;
- figure 2 illustrates, by means of a block chart, some aspects of an embodiment of the method for managing and controlling the operation of a hybrid propulsion system of the present invention;
- figure 3 is a chart which represents an example of relationship between given parameters used in an embodiment of the method;
- figure 4 shows a diagrammatic representation of a procedure for calculating the efficiency of an electric powertrain, according to an embodiment of the method according to the invention.

DETAILED DESCRIPTION

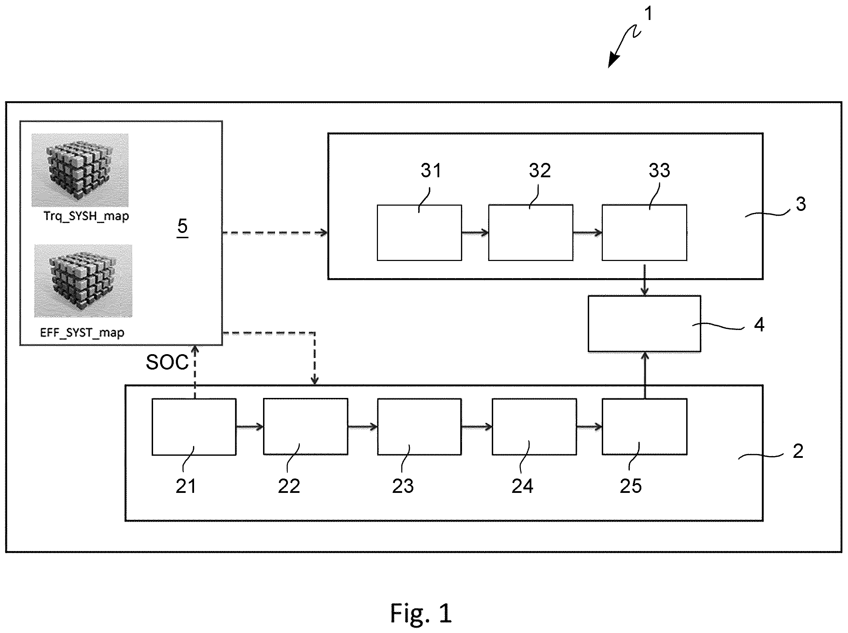

A method for managing and controlling the operation of a hybrid propulsion system 1 will now be described, making reference to figures 1-4.

The hybrid propulsion system for vehicles considered here may be of the most various type, provided that it comprises at least one electric powertrain 2 and a thermal powertrain 3, that are configured to operate in the propulsion system either directly or indirectly on a common reference point 4. The described method also applies to hybrid powertrains comprising more than two units, e.g. with multiple electric powertrains.

The method firstly comprises a step of storing, in a control unit 5 of the propulsion system 1, digital data organized in a first table (Trq_SYSH_map) configured to provide an electric powertrain optimum torque value (EM-Trq-Opt) adapted to maximize the total efficiency (EffSysH) of the propulsion system, as a function of operative parameters of the propulsion system, and moreover a step of storing, in the control unit 5 of the propulsion system, further digital data organized in a second table (EFF_SYST_map) configured to supply a thermal powertrain efficiency value (EffSysT) as a function of the aforesaid operative parameters of the propulsion system.

The aforesaid operative parameters of the propulsion system comprise torque Td and number of revolutions RPMd, referred to the aforesaid common reference point 4, and gear (Gear). The torque Td is the total required torque referred to (either calculated at or detectable at) the common reference point. The number of revolutions RPMd is the number of revolutions per time unit (for example, the number of revolutions per minute), referred to the common reference point.

During the operation of the hybrid propulsion system 1, at every required operative condition, expressed through the aforesaid operative parameters of the propulsion system, the method comprises the following further steps, carried out by the control unit 5 of the propulsion system: determining, as a function of the required operative condition, the efficiency of the thermal powertrain (EffSysT) based on the aforesaid second table (EFF_SYST_map); furthermore, either detecting or receiving information about a current State of Charge (SOC) value of a battery 21 comprised in the hybrid propulsion system; then determining, as a function of the detected State of Charge (SOC), an operative control threshold, represented by a thermal propulsion threshold efficiency value (Eff_T_THR), based on a predetermined relationship (f) in which the operative control threshold (Eff_T_THR) increases as the State of Charge (SOC) increases.

The method then provides comparing the efficiency of the thermal powertrain (EffSysT) with the operative control threshold (Eff_T_THR).

If the efficiency of the determined thermal powertrain (EffSysT) is higher than the operative control threshold (Eff_T_THR), the method includes switching off the electric powertrain 2 and commanding the activation of the thermal powertrain 3.

If the determined efficiency of the thermal powertrain (EffSysT) is lower than said operative control threshold (Eff_T_THR), the method includes commanding the activation of the electric powertrain 2, so that the electric powertrain 2 works with the stored value of electric powertrain optimum torque (EM-Trq-Opt) corresponding to the required operative condition.

It can be noted that the method described above provides both a procedure for optimizing the operation of the electric powertrain by using the criterion of maximizing the overall efficiency of the hybrid system and a strategy for "turning on" or "turning off" the aforesaid procedure, in view of a more comprehensive consideration of the performance of the hybrid propulsion system.

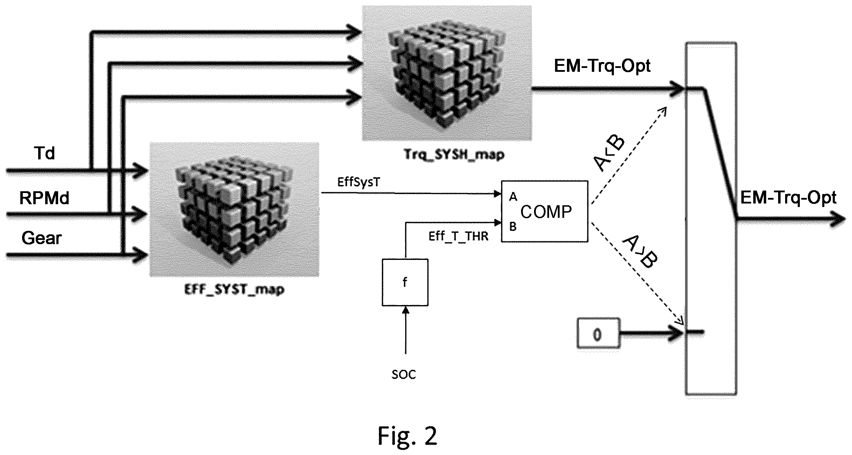

A further diagrammatic illustration of the aforesaid strategy for "turning on" or "turning off" the method for optimizing the electric powertrain is shown in figure 2. A thermal powertrain efficiency value (EffSysT), associated with a given operating condition defined by the parameters Td, RPMd, Gear, is obtained from the second table (EFF_SYST_map). On the other hand, the block named "f" processes an input value of the State of Charge SOC (representing the current State of Charge of the battery, either detected or estimated) to obtain the value of the operative control threshold (Eff_T_THR) as an output. The operative block COMP compares the aforesaid two values and turns the strategy on or off according to whether the efficiency of the thermal powertrain (EffSysT) is lower or higher than the operative control threshold (Eff_T_THR), respectively. The selection is diagrammatically shown in the figure by the selector block on the right. Only if the strategy is "active" i.e.., "on", the electric powertrain is activated and set to work to the electric powertrain optimum torque value (EM-Trq-Opt) acquired at the output of the first table (Trq_SYSH_map).

In the example in figure 2, it is worth noting that the input parameters, based on which the method operates "on-line" during the functioning of the hybrid propulsion system, are the parameters "total required torque at the differential (Td)", "required number of revolutions per minute at the differential (RPMd)" and "gear (Gear)", which ultimately depend on what the vehicle driver requires. Such three parameters define sets, each of which is associated with an operative point of the propulsion system (which hereinafter will be called "engine points" or "motor operating point" for the sake of brevity). The aforesaid parameters are also used by the control unit to consult the first and the second table and obtain the respective outputs.

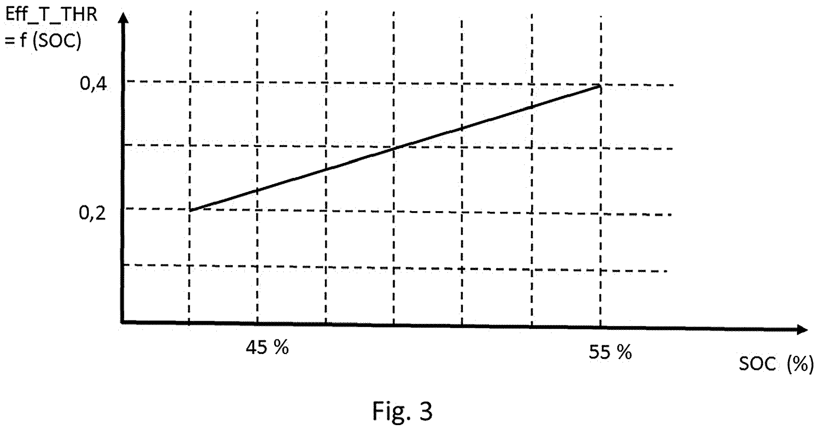

Figure 3 shows an example of the predefined relationship "f", which describes the dependence of the operative control threshold on the State of Charge, for typical ranges of efficiency value of the thermal engine (between 0.2 and 0.4) and ranges of State of Charge value (between 45% and 55%). The example trend shown in figure 3 increases in linear manner.

According to other possible implementation options, such trend is represented by curves corresponding to non-linear functions of different type, in which anyway the operative control threshold increases as the State of Charge increases.

For low values of State of Charge, the threshold decreases, and so the engine points (of the thermal engine) having thermal engine efficiency lower than the threshold (for which the strategy would activate) also decrease; consequently, the probability that the strategy is "off" increases.

On the contrary, for high values of State of Charge, the threshold increases, and so the engine points (of the thermal engine) having thermal engine efficiency lower than the threshold also increase; consequently, the probability that the strategy is "on" increases.

From another point of view, the probability of electric powertrain turning on increases as the State of Charge increases.

It is worth noting that when the strategy is enabled, the system always operates in such a way to follow the optimal operating point.

Indeed, according to an implementation example of the method, the hybrid propulsion system 1 operates though a work cycle which can be represented by a curve in which each point is associated with a respective State of Charge value and with a respective thermal powertrain efficiency point.

The optimization strategy provided by the present method, when activated, determines in real time whether the traction must be electric only, thermal only or hybrid.

Indeed, according to a possible implementation option of the method, when the electric powertrain 2 is activated, the thermal powertrain 3 is switched off, and the total torque supplied coincides with the optimum torque supplied by the electric powertrain (EM-Trq-Opt).

According to another possible implementation option of the method, when the electric powertrain 2 is activated, the thermal powertrain 3 is also kept activated, and the total torque supplied coincides with the sum of the optimum torque supplied by the electric powertrain (EM-Trq-Opt) and of the torque supplied by the thermal powertrain.

Considering now the aforesaid common reference point 4 of the electric powertrain 2 and of the thermal powertrain 3, it is worth noting that, according to an embodiment of the method, this common reference point 4 is the differential 4 of the vehicle, and the operating parameters of the propulsion system comprise torque at the differential Td (total requested torque at the differential), number of revolutions per minute RPMd at the differential, and gear (Gear).

In this case, the common reference point 4 is a point on which both the powertrains act mechanically, and is therefore also a common action point.

According to a terminology generally known in the sector, the case illustrated above refers for example to a "P3 configuration", in which there is a single electric motor connected to the differential, and in which the propulsion system consists of only two powertrains, a thermal one and an electric one.

In accordance with other embodiments of the method, the common reference point 4 may be a different point of the propulsion system and not necessarily a point on which all the engine and transmission assemblies act directly in a mechanical manner.

Indeed, the common reference point is a convenient common point for calculating the quantities in play; therefore, it can also be a point at which the different powertrains do not act in a direct mechanical manner, but which allows expressing in a consistent manner all parameters in play and calculate the quantities and parameters necessary to implement the method.

Obviously, also in this case, the different powertrains influence the parameters in the common reference point, but in indirect manner. It is then possible to express all the quantities and parameters associated with the action of each powertrain, at the common reference point, by means of calculations that are *per se* known in the concerned technical field.

Thus, in this case, the operative parameters of the propulsion system include the torque calculated at the common reference point (total requested torque, scaled according to known mechanical ratios so as to be expressed as a torque at the common reference point), the revolutions per time unit calculated at the common reference point (scaled according to known mechanical ratios so as to be expressed as number of revolutions per time unit at the common reference point), and gear.

Examples of further possible configurations (in addition to the aforesaid "P3 configuration") may be a "hybrid P2 configuration" (electrical machine connected to the primary shaft of the gearbox, immediately after the clutch), in which the more advantageous common reference point can be just the primary shaft of the transmission. Alternatively, a "P1-P3 configuration" (electric machine connected both to the drive shaft and to layshaft of the gearbox) may also be considered, in which the common reference point can be chosen among the drive shaft, the differential or even the wheels.

Some details relating to the stored tables, already mentioned above, will be now described.

According to an implementation option of the method, the first stored table is a "look-up" table corresponding to a three-dimensional matrix, wherein every cell is defined by a set of three parameters, comprising torque Td and number of revolutions RPMd, referred to the common reference point, and gear (Gear), that are used by the control unit 5 as table consultation input, and the cell contains the optimum electric powertrain torque value (EM-Trq-Opt) corresponding to the respective set of three parameters, which is provided in response to the consultation of the table.

According to an implementation option of the method, the second stored table is a "look-up" table corresponding to a three-dimensional matrix, wherein every cell is defined by a set of three parameters, comprising torque Td and number of revolutions (RPMd), referred to the common reference point, and gear (Gear), that are used by the control unit 5 as table consultation input, and the cell contains the thermal powertrain efficiency value (EffSysT) corresponding to the respective set of three parameters, which is provided in response to the consultation of the table.

The tables are stored, in a manner *per se* known, in the control unit in the form of digital data structured.

It is worth noting that the table of efficiency of the thermal powertrain is queried by means of parameters which refer to the total required torque and the required total number of revolutions per time unit, and with data relating to a working situation of the thermal engine alone. This is coherent with the fact that the information about the thermal powertrain efficiency is primarily used to define the operative threshold which is used to decide whether or not to activate the strategy of optimization of the electric powertrain operation.

If the strategy is deactivated, the electric powertrain is switched off and then only thermal powertrain is working, which must provide all the required torque Td. So, in this case, the thermal powertrain efficiency supplied by the table is also the actual total efficiency of the system.

If the strategy is activated, the electric powertrain is turned on, and the variable which guides the operation of the propulsion system is the electric powertrain optimum torque (EM-Trq-Opt). If such optimum torque meets the total torque requirement, the thermal engine stays off and only the electric motor is used. Otherwise, as described above, both powertrains operate simultaneously, and the thermal powertrain operates so as to provide a torque which is the difference between the total required torque and the electric powertrain optimum torque EM-Trq-Opt, determined as a result of the strategy.

Indeed, if the reference point is the differential, the following relationships apply at the differential:

total torque Td = torque supplied by the thermal engine (T_ICEd) + torque supplied by the electric motor (T_EMGd);

revolutions per minute RPMd = revolutions per minute of the thermal engine (RPM_ICEd) = revolutions per minute of the electric motor (RPM_EMGd).

If the reference point is another point of the propulsion system, similar relationships apply, with appropriate scaling factors.

Obviously, an implementation option of the method provides that the formulae describing every relationship between the above parameters are stored and used in the control unit 5.

The embodiments of the method described hereto relate to procedures performed during the operation of the propulsion system (and for this reason are briefly defined in this description as "on-line procedures"). Such embodiments are totally independent from the methods with which the aforesaid data stored in the control unit are calculated, and can therefore be implemented in association with any method for calculating the table data.

Hereinafter, some possible table calculation methods will be described, the procedures being performed before storing, and therefore not during the operation of the propulsion system (and for this reason are briefly defined in this description as "off-line procedures").

It is worth noting that these off-line procedures, although described herein as further embodiments of the method, can also be understood as methods in themselves, also comprised in the invention.

According to an embodiment, the method, before the steps of storing, comprise the further steps of calculating, based on characterization data or on a simulation model of the thermal powertrain, the thermal powertrain efficiency values (EffSysT) as a function of gear (Gear) and torque (T_ICEd) and number of revolutions (RPM_ICEd) of the thermal powertrain, referred to the common reference point; and then obtaining the second table (EFF_SYST_map) based on the calculated thermal powertrain efficiency values (EffSysT).

The method then comprises the step of calculating, based on characterization data or on a simulation model of the electric powertrain, the electric powertrain efficiency values (EffSysE) based on every set of three parameters comprising gear (Gear), and torque (T_EMGd) and revolutions per minute (RPM_EMGd) of the electric powertrain, referred to the common reference point.

The method then provides the step of calculating the total efficiency of the hybrid propulsion system (EffSysH), as a function of gear (Gear), torque at the common reference point (Td), number of revolutions at the common reference point (RPMd) and electric powertrain torque at the common reference point (T_EMGd), based on the thermal powertrain efficiency values (EffSysT) and the calculated electric powertrain efficiency values (EffSysE).

So, for every possible operative condition, represented by a set of three parameters made up of gear (Gear), required torque at the common reference point (Td), number of revolutions required at the common reference point (RPMd), the method includes determining the maximum total efficiency value of the hybrid propulsion system (EffSysH_max) and identifying the corresponding electric powertrain torque value at the differential (T_EMGd) as the electric powertrain optimum torque of (EM-Trq-Opt) for the respective set of three parameters.

Finally, the method includes organizing the digital data related to the electric powertrain optimum torque (EM-Trq-Opt) for all of the sets of three parameters made up of gear (Gear), total torque at the common reference point (Td), number of revolutions at the common reference point (RPMd), so as to obtain the aforesaid first table (Trq_SYSH_map).

According to an implementation option of the method, wherein the electric powertrain 2 comprises a battery 21, an inverter 23 and an electric motor 25, the step of calculating the electric powertrain efficiency values (EffSysE) comprises: estimating a battery efficiency (Eff_BAT), an inverter efficiency (Eff_INV) and an electric motor efficiency (Eff_EMG); and multiplying the battery efficiency (Eff_BAT), the inverter efficiency (Eff_INV) and the electric motor efficiency (Eff_EMG), to obtain the electric powertrain efficiency (EffSysE).

In summary, the following formula is applied in this case:

$$EffSysE = Eff\_EMG * Eff\_INV * Eff\_BAT$$

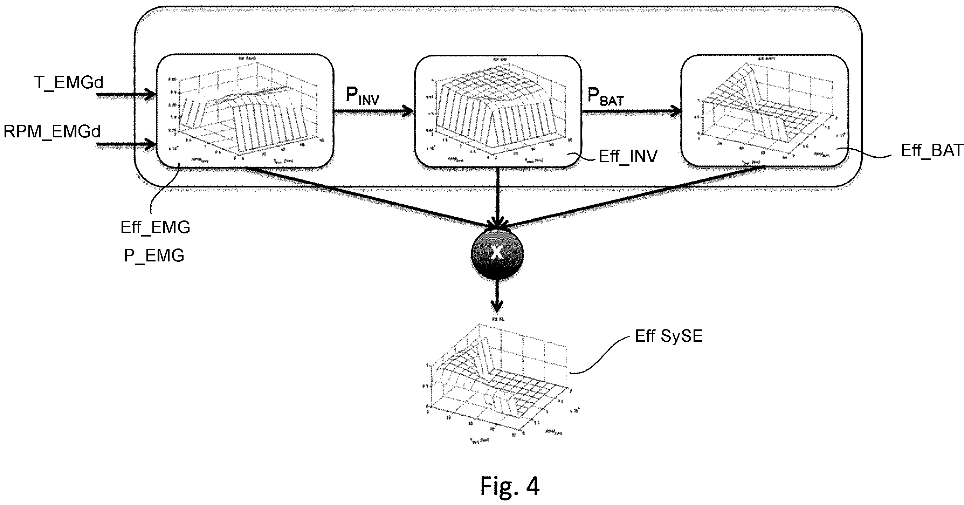

In a particular implementation example, shown in figure 4, the electric motor efficiency (Eff_EMG) is estimated for each motor operating point, for each torque able to be delivered at all possible numbers of revolutions per time unit, based on a characterization map of the electric motor efficiency.

The inverter efficiency (Eff_INV) is estimated on the basis of the continuous power required at the inverter (P_INV) for each motor operating point, which in turn is estimated based on the three-phase power of the electric motor (P_EMG) requested at each motor operating point, taking into account a loss on the connecting cables 24 between inverter and electric motor. The three-phase power (P_EMG) requested in each motor operating point is, in turn, estimated on the basis of the aforesaid characterization map of the electric motor efficiency.

The battery efficiency (Eff_BAT) is estimated based on the electrical power required to the battery (P_BAT), as a function of each value of the State of Charge (SOC) of the battery. The electric power required at the battery (P_BAT) is in turn estimated taking into account the continuous power required at the inverter (P_INV) and a loss on the connecting cables 22 between battery and inverter.

In more detail, being known the characteristics of the electric motor, and therefore also its efficiency, it is possible to obtain the three-phase power required for each individual engine point, i.e. for each torque which can be delivered at all possible numbers of revolutions per time unit.

The three-phase power required for each engine point being now known, it is possible to obtain the continuous power (DC) needed by the inverter, taking also into account the energy dissipation occurring in the cables (which depends on length, cross-area section and material type of the wiring). From this information, it is finally possible to obtain the inverter efficiency as a function of the delivered torque and of the revolutions per time unit at the reference point of the system.

The continuous power required to the inverter for each engine point being now known, it is possible to calculate the electric power that the battery must produce as a function of all possible states of charge. Also in this case, dissipations on the wiring are taken into account. In this manner, it is possible to obtain the battery efficiency as a function of the State of Charge, the delivered torque and engine revolutions per time unit, at the reference point of the system.

According to a further implementation example, the battery efficiency (Eff_BAT), the inverter efficiency (Eff_INV) and the electric motor efficiency (Eff_EMG) are estimated also taking into account a first corrective factor representative of the dependence on the temperature and a second corrective factor representative of ageing phenomena.

In fact, in evaluating all the efficiencies, including those of the cables, it may be appropriate to introduce such corrective factors which represent temperature dependence and aging of components.

In general, the temperature dependence can be incorporated by means of thermal models of the various components or, in an approximate way, by establishing an average operating temperature. The corrective factor due to ageing can be obtained by performing specific experimental laboratory tests.

In general, the thermal subsystem consists of all the components present between the internal combustion engine and the common working point with the electrical part.

According to an implementation option of the method, in the case of "P3 configuration", the thermal powertrain 3 comprises a thermal motor 31 (i.e., thermal engine 31), a clutch 32 and a gearbox 33.

In such a case, the step of calculating the thermal powertrain efficiency values (EffSysT) comprises: estimating a thermal motor efficiency (Eff_ICE), a clutch efficiency (Eff_CLT) and a gearbox efficiency (Eff_GBX); multiplying the thermal motor efficiency (Eff_ICE), the clutch efficiency (Eff_CLT) and the gearbox efficiency (Eff_GBX), to obtain the thermal powertrain efficiency (EffSysT).

In summary, the following formula is applied in this case:

$$EffSysT = Eff\_ICE * Eff\_GBX * Eff\_CLT$$

Indeed, also in this case, the basic characteristics of the single components being fixed and known, it is possible to determine the overall efficiency as a function of its engine point (delivered torque and engine revolutions per time unit). This is possible because, having fixed a working point and fixed a gearbox speed, all the involved power values are fixed and, consequently, also the losses along the chain are fixed

In a particular implementation example, the thermal motor efficiency (Eff_ICE) is estimated as the ratio between mechanical energy produced and energy deriving from the combustion of the injected fuel, based on characterization data or simulation models of the thermal motor.

For example, the thermal motor efficiency (Eff_ICE) is calculated based on the specific fuel consumption, i.e., the parameter BSFC, and on the energy density of the fuel used, i.e., the parameter K_E, according to the formula:

$$Eff\_ICE = (BSFC \cdot K\_E)^{-1}.$$

According to different possible implementation options, the clutch efficiency (Eff_CLT) is calculated based on a simulation model of the clutch, or based on a matrix as a function of temperature and motor operating point, or it is fixed at a predetermined constant value.

According to different implementation options, the gearbox efficiency (Eff_GBX) is calculated based on a simulation model of the gearbox, or based on a matrix in function of temperature and motor operating point, or it is fixed at a predetermined constant value.

According to an embodiment, considering that, as mentioned, the total torque at the common reference point Td is given by the sum of the electric powertrain torque at the common reference point T_EMGd and of the thermal powertrain torque at the common reference point T_ICEd, the step of calculating the total efficiency of the hybrid propulsion system (EffSysH) is carried out according to the formula:

$$EffSysH(RPM_d, T_d, Gear, T\_EMG_d) = \frac{T_d}{\left(\frac{T\_EMG_d}{EffSysE} + \frac{T_d - T\_EMG_d}{EffSysT}\right)}$$

So, once known the efficiencies of the electric system and of the thermal system, it is possible to determine the overall efficiency of the hybrid system as a function of the torque required at the differential Td, the torque of the electric motor at the differential T_EMGd, the number of revolutions per time unit at the differential RPMd and the gear (Gear). From this information, given a generic engine point and having fixed the optimum gear, it is possible to extrapolate the target torque value to be supplied to the electric powertrain 2 so as to maximize the efficiency of the entire hybrid system.

According to further embodiments, the method may comprise other optimization procedures. For example, starting from the aforesaid second table (EFF_SYST_map), having fixed the engine point, it is possible to extrapolate the maximum efficiency of the thermal system and the corresponding gear which allow it to be obtained.

Such further optimization procedures can be used independently of or jointly with the procedures described above.

As can be seen, the purpose of the present invention is fully achieved by the method for managing and controlling the operation of a hybrid propulsion system, by virtue of the functional characteristics described above.

In fact, the method described above provides both a method for optimizing the operation of the electric powertrain, by using the criterion of maximizing the overall efficiency of the hybrid system, and a strategy for "turning on" or "turning off" the aforesaid method, in view of a more comprehensive consideration of the performance of the hybrid propulsion system which takes into account the needs of not consuming the battery excessively and at the same time to avoid excessive consumption of fuel.

In particular, the flexible setting of the threshold which discriminates the activation and deactivation of the strategy of efficiency maximization allows to activate the strategy with a higher probability (and therefore turning on the electric motor in optimum efficiency conditions and obtaining the maximum efficiency of the system) when the state of charge is relatively high.

Vice versa, the strategy is activated with a lower probability when the state of charge is relatively low, whereby maintaining a minimum efficiency threshold of the thermal engine under which the electric motor is activated in any case, to avoid particularly inefficient working conditions of the thermal system and not excessively penalize performance in terms of fuel consumption.

Additionally, the "off-line" steps of the method described above offer an alternative solution for calculating the total efficiency of the hybrid propulsion system and the optimum torque to be requested to the electric motor.

A person skilled in art may make changes and adaptations to the embodiments of the method for managing and controlling the operation of a hybrid propulsion system described above or can replace elements with others which are functionally equivalent to satisfy contingent needs without departing from the scope of protection of the appended claims.

**Claims**

1. Method for managing and controlling the operation of a hybrid propulsion system (1) for vehicles comprising at least one electric powertrain (2) and a thermal powertrain (3), configured to act in the propulsion system directly or indirectly on a common reference point (4), wherein the method comprises the steps of:

   - storing, in a control unit (5) of the propulsion system (1), digital data organized in a first table (Trq_SYSH_map) configured to provide an electric powertrain optimum torque value (EM-Trq-Opt) adapted to maximize the total efficiency (EffSysH) of the propulsion system, as a function of operative parameters of the propulsion system;
   - storing, in the control unit (5) of the propulsion system, further digital data organized in a second table (EFF_SYST_map) configured to supply a thermal powertrain efficiency value (EffSysT) as a function of said operative parameters of the propulsion system;
   wherein said operative parameters of the propulsion system comprise torque (Td) and number of revolutions per time unit (RPMd), referring to said common reference point (4), and gear (Gear), wherein said torque (Td) is the total required torque referred to the common reference point (4), either calculated or detectable at the common reference point (4);
   **characterized in that** the method, during the operation of the hybrid propulsion system (1), at every required operative condition, expressed through said operative parameters of the propulsion system, comprises the following further steps, carried out by the control unit (5) of the propulsion system:
   - determining, as a function of the required operative condition, the efficiency of the thermal powertrain (EffSysT) based on said second table (EFF_SYST_map);
   - detecting or receiving information about a current state of charge (SOC) value of a battery comprised in the hybrid propulsion system;
   - determining, as a function of the detected State of Charge (SOC), an operative control threshold, represented by a thermal propulsion threshold efficiency value (Eff_T_THR), based on a predetermined relationship (f) in which the operative control threshold (Eff_T_THR) increases as the state of charge (SOC) increases;
   - comparing the efficiency of the thermal powertrain (EffSysT) with the operative control threshold (Eff_T_THR);
   - if the efficiency of the thermal powertrain (EffSysT) determined is greater than said operative control threshold (Eff_T_THR), switching off the electric powertrain (2) and commanding the activation of the thermal powertrain (3);

- if the efficiency of the thermal powertrain (EffSysT) determined is less than said operative control threshold (Eff_T_THR), commanding the activation of the electric powertrain (2), in such a way that the electric powertrain (2) works with the stored value of electric powertrain optimum torque (EM-Trq-Opt) corresponding to the required operative condition.

2. Method according to claim 1, wherein the common reference point (4) of the electric powertrain (2) and of the thermal powertrain (3) is the differential of the vehicle,
and wherein the operative parameters of the propulsion system comprise torque at the differential (Td), number of revolutions at the differential (RPMd), and gear (Gear).

3. Method according to claim 1 or 2, wherein, when the activation of the electric powertrain (2) is commanded, the thermal powertrain (3) is switched off, and the total torque supplied coincides with the optimum torque supplied by the electric powertrain (EM-Trq-Opt).

4. Method according to claim 1 or 2, wherein, when the activation of the electric powertrain (2) is commanded, the thermal powertrain (3) is also kept activated, and the total torque supplied coincides with the sum of the optimum torque supplied by the electric powertrain (EM-Trq-Opt) and of the torque supplied by the thermal powertrain.

5. Method according to any one of the preceding claims, wherein:

- the first table stored is a "look-up" table corresponding to a three-dimensional matrix, wherein every cell is defined by a set of three parameters, comprising torque (Td) and number of revolutions (RPMd), referring to the common reference point, and gear (Gear), used by the control unit (5) as table consultation input, and contains the optimum torque value of electric powertrain (EM-Trq-Opt) corresponding to the respective set of three parameters, which is provided in response to the consultation of the table;
- the second table stored is a "look-up" table corresponding to a three-dimensional matrix, wherein every cell is defined by a set of three parameters, comprising torque (Td) and number of revolutions (RPMd), referring to the common reference point, and gear (Gear), used by the control unit (5) as table consultation input, and contains the thermal powertrain efficiency value (EffSysT) corresponding to the respective set of three parameters, which is provided in response to the consultation of the table.

6. Method according to any one of the preceding claims, wherein the method, before the storing steps, comprises the further steps of:

- calculating, based on characterization data or on a simulation model of the thermal powertrain, the thermal powertrain efficiency values (EffSysT) as a function of gear (Gear) and torque (T_ICEd) and number of revolutions (RPM_ICEd) of the thermal powertrain, referred to said common reference point;
- obtaining said second table (EFF_SYST_map) based on the calculated thermal powertrain efficiency values (EffSysT);
- calculating, based on characterization data or on a simulation model of the electric powertrain, the electric powertrain efficiency values (EffSysE) based on every set of three parameters comprising gear (Gear), and torque (T_EMGd) and number of revolutions (RPM_EMGd) of the electric powertrain, referred to said common reference point;
- calculating the total efficiency of the hybrid propulsion system (EffSysH), as a function of gear (Gear), torque at the common reference point (Td), number of revolutions at the common reference point (RPMd) and electric powertrain torque at the common reference point (T_EMGd), based on the thermal powertrain efficiency values (EffSysT) and the calculated electric powertrain efficiency values (EffSysE);
- for every possible operative condition, represented by a set of three parameters made up of gear (Gear), required torque at the common reference point (Td), number of revolutions required at the common reference point (RPMd), determining the maximum total efficiency value of the hybrid propulsion system (EffSysH_max) and identifying the corresponding electric powertrain torque value at the differential (T_EMGd) as the electric powertrain optimum torque of (EM-Trq-Opt) for the respective set of three parameters;
- organizing the digital data related to the electric powertrain optimum torque (EM-Trq-Opt) for all of the sets of three parameters made up of gear (Gear), total torque at the common reference point (Td), number of revolutions at the common reference point (RPMd), so as to obtain said first table (Trq_SYSH_map).

7. Method according to claim 6, wherein the electric powertrain (2) comprises a battery (21), an inverter (23) and an electric motor (25), and wherein the step of calculating the electric powertrain efficiency values (EffSysE) comprises:

- estimating a battery efficiency (Eff_BAT), an inverter efficiency (Eff_INV) and an electric motor efficiency (Eff_EMG);
- multiplying the battery efficiency (Eff_BAT), the inverter efficiency (Eff_INV) and the electric motor efficiency (Eff_EMG), to obtain the electric powertrain efficiency (EffSysE).

8.  Method according to claim 7, wherein:

- the electric motor efficiency (Eff_EMG) is estimated for each motor operating point, for each torque able to be delivered at all possible numbers of revolutions per time unit, based on a characterization map of the electric motor efficiency;
- the inverter efficiency (Eff_INV) is estimated based on the continuous power required at the inverter (P_INV) for each motor operating point, wherein the continuous power required at the inverter (P_INV) is estimated based on the three-phase power of the electric motor (P_EMG) required at each motor operating point taking into account a loss on the connection cables (24) between inverter and electric motor, and wherein the three-phase power (P_EMG) required in each motor operating point is estimated based on said characterization map of the electric motor efficiency;
- the battery efficiency (Eff_BAT) is estimated based on the electric power required at the battery (P_BAT), as a function of every value of the state of charge (SOC) of the battery, wherein the electric power required at the battery (P_BAT) is estimated taking into account the continuous power required at the inverter (P_INV) and a loss on the connection cables (22) between battery and inverter.

9.  Method according to claim 8, wherein the battery efficiency (Eff_BAT), the inverter efficiency (Eff_INV) and the electric motor efficiency (Eff_EMG) are estimated also taking into account a first corrective factor representative of the dependence on the temperature and a second corrective factor representative of ageing phenomena.

10. Method according to claim 6, wherein the thermal powertrain (3) comprises a thermal motor (31), a clutch (32) and a gearbox (33), and wherein the step of calculating the thermal powertrain efficiency values (EffSysT) comprises:

- estimating a thermal motor efficiency (Eff_ICE), a clutch efficiency (Eff_CLT) and a gearbox efficiency (Eff_GBX);
- multiplying the thermal motor efficiency (Eff_ICE), the clutch efficiency (Eff_CLT) and the gearbox efficiency (Eff_GBX), to obtain the thermal powertrain efficiency (EffSysT).

11. Method according to claim 10, wherein the thermal motor efficiency (Eff_ICE) is estimated as the ratio between mechanical energy produced and energy deriving from the combustion of the injected fuel, based on characterization data or simulation models of the thermal motor.

12. Method according to claim 11, wherein the thermal motor efficiency (Eff_ICE) is calculated based on the specific fuel consumption, i.e., the parameter BSFC, and on the energy density of the fuel used, i.e., the parameter K_E, according to the formula: $Eff\_ICE = (BSFC \cdot K\_E)^{-1}$.

13. Method according to claim 11, wherein the clutch efficiency (Eff_CLT) is calculated based on a simulation model of the clutch, or based on a matrix in function of temperature and motor operating point, or it is fixed at a predetermined constant value.

14. Method according to claim 11, wherein the gearbox efficiency (Eff_GBX) is calculated based on a simulation model of the gearbox, or based on a matrix in function of temperature and motor operating point, or it is fixed at a predetermined constant value.

15. Method according to claim 6, wherein the torque at the common reference point (Td) is given by the sum of the electric powertrain torque at the common reference point (T_EMGd) and of the thermal powertrain torque at the common reference point (T_ICEd), and wherein the step of calculating the total efficiency of the hybrid propulsion system (EffSysH) is carried out through the formula:

$$EffSysH(RPM_d, T_d, Gear, T\_EMG_d) = \frac{T_d}{\left(\frac{T\_EMG_d}{EffSysE} + \frac{T_d - T\_EMG_d}{EffSysT}\right)}$$

**Patentansprüche**

**1.** Verfahren zum Verwalten und Steuern des Betriebs eines Hybridantriebssystems (1) für Fahrzeuge, umfassend wenigstens einen elektrischen Antriebsstrang (2) und einen thermischen Antriebsstrang (3), welche dazu eingerichtet sind, an einem gemeinsamen Referenzpunkt (4) direkt oder indirekt in dem Antriebssystem zu wirken, wobei das Verfahren die folgenden Schritte umfasst:

- Speichern, in einer Steuereinheit (5) des Antriebssystems (1), digitaler Daten, welche in einer ersten Tabelle (Trq_SYSH_map) organisiert sind, welche dazu eingerichtet ist, einen Wert eines optimalen Drehmoments des elektrischen Antriebsstrangs (EM-Trq-Opt) bereitzustellen, welcher dafür angepasst ist, den Gesamtwirkungsgrad (EffSysH) des Antriebssystems zu maximieren, als eine Funktion von Betriebsparametern des Antriebssystems;
- Speichern, in der Steuereinheit (5) des Antriebssystems (1), weiterer digitaler Daten, welche in einer zweiten Tabelle (EFF_SYST_map) organisiert sind, welche dazu eingerichtet ist, einen Wert eines Wirkungsgrads des thermischen Antriebsstrangs (EffSysT) zu liefern, als eine Funktion der Betriebsparameter des Antriebssystems; wobei die Betriebsparameter des Antriebssystems ein Drehmoment (Td) und eine Anzahl von Umdrehungen pro Zeiteinheit (RPMd), welche sich auf den gemeinsamen Referenzpunkt (4) beziehen, und einen Gang (Gear) umfasst, wobei das Drehmoment (Td) das erforderliche Gesamtdrehmoment ist, welches sich auf den gemeinsamen Referenzpunkt (4) bezieht, welches entweder berechnet wird oder an dem gemeinsamen Referenzpunkt (4) erfassbar ist;

**dadurch gekennzeichnet, dass** das Verfahren, während des Betriebs des Hybridantriebssystems (1) in jedem erforderlichen Betriebszustand, welcher durch die Betriebsparameter des Antriebssystems ausgedrückt wird, die folgenden weiteren Schritte umfasst, welche durch die Steuereinheit (5) des Antriebssystems ausgeführt werden:
- Bestimmen, als eine Funktion des erforderlichen Betriebszustands, des Wirkungsgrads des thermischen Antriebsstrangs (EffSysT) basierend auf der zweiten Tabelle (EFF_SYST_map);
- Erfassen oder Empfangen von Informationen über einen Wert eines aktuellen Ladezustands (SOC) einer in dem Hybridantriebssystem umfassten Batterie;
- Bestimmen, als eine Funktion des erfassten Ladezustands (SOC), eines Betriebssteuerungsschwellenwerts, welcher von einem Schwellenwertwirkungsgradwert des thermischen Antriebs (Eff_T_THR) repräsentiert ist, basierend auf einer vorbestimmten Beziehung (f), in welcher sich der Betriebssteuerungsschwellenwert (Eff_T_THR) erhöht, wenn sich der Ladezustand (SOC) erhöht;
- Vergleichen des Wirkungsgrads des thermischen Antriebsstrangs (EffSysT) mit dem Betriebssteuerungsschwellenwert (Eff_T_THR);
- wenn bestimmt wird, dass der Wirkungsgrad des thermischen Antriebsstrangs (EffSysT) größer als der Betriebssteuerungsschwellenwert (Eff_T_THR) ist, Ausschalten des elektrischen Antriebsstrangs (2) und Befehlen der Aktivierung des thermischen Antriebsstrangs (3);
- wenn bestimmt wird, dass der Wirkungsgrad des thermischen Antriebsstrangs (EffSysT) kleiner als der Betriebssteuerungsschwellenwert (Eff_T_THR) ist, Befehlen der Aktivierung des elektrischen Antriebsstrangs (2) in einer derartigen Weise, dass der elektrische Antriebsstrang (2) entsprechend dem erforderlichen Betriebszustand mit dem gespeicherten Wert des optimalen Drehmoments des elektrischen Antriebsstrangs (EM-Trq-Opt) arbeitet.

**2.** Verfahren nach Anspruch 1, wobei der gemeinsame Referenzpunkt (4) des elektrischen Antriebsstrangs (2) und des thermischen Antriebsstrangs (3) das Differenzial des Fahrzeugs ist,
und wobei die Betriebsparameter des Antriebssystems ein Drehmoment an dem Differenzial (Td), eine Anzahl von Umdrehungen an dem Differenzial (RPMd) und einen Gang (Gear) umfassen.

**3.** Verfahren nach Anspruch 1 oder 2, wobei, wenn die Aktivierung des elektrischen Antriebsstrangs (2) befohlen wird, der thermische Antriebsstrang (3) ausgeschaltet wird und das zugeführte Gesamtdrehmoment mit dem durch den elektrischen Antriebsstrang zugeführten optimalen Drehmoment (EM-Trq-Opt) übereinstimmt.

**4.** Verfahren nach Anspruch 1 oder 2, wobei, wenn die Aktivierung des elektrischen Antriebsstrangs (2) befohlen wird, der thermische Antriebsstrang (3) ebenfalls aktiviert bleibt und das zugeführte Gesamtdrehmoment mit der Summe des durch den elektrischen Antriebsstrang zugeführten optimalen Drehmoments (EM-Trq-Opt) und des durch den thermischen Antriebsstrang zugeführten Drehmoments übereinstimmt.

**5.** Verfahren nach einem der vorhergehenden Ansprüche, wobei:

- die erste gespeicherte Tabelle eine "Look-up"-Tabelle ist, welche einer dreidimensionalen Matrix entspricht, wobei jede Zelle durch einen Satz von drei Parametern definiert ist, welcher ein Drehmoment (Td) und eine Anzahl von Umdrehungen (RPMd), welche sich auf den gemeinsamen Referenzpunkt beziehen, und einen Gang (Gear) umfasst, welche von der Steuereinheit (5) als eine Tabellenkonsultationseingabe verwendet werden, und den Wert des optimalen Drehmoments des elektrischen Antriebsstrangs (EM-Trq-Opt) enthält, welcher dem jeweiligen Satz von drei Parametern entspricht, welcher als Antwort auf die Konsultation der Tabelle bereitgestellt wird;
- die zweite gespeicherte Tabelle eine "Look-up"-Tabelle ist, welche einer dreidimensionalen Matrix entspricht, wobei jede Zelle durch einen Satz von drei Parametern definiert ist, welcher ein Drehmoment (Td) und eine Anzahl von Umdrehungen (RPMd), welche sich auf den gemeinsamen Referenzpunkt beziehen, und einen Gang (Gear) umfasst, welche von der Steuereinheit (5) als eine Tabellenkonsultationseingabe verwendet werden, und den Wirkungsgradwert des thermischen Antriebsstrangs (EffSysT) enthält, welcher dem jeweiligen Satz von drei Parametern entspricht, welcher als Antwort auf die Konsultation der Tabelle bereitgestellt wird.

**6.** Verfahren nach einem der vorhergehenden Ansprüche, wobei das Verfahren vor den Speicherschritten die folgenden weiteren Schritte umfasst:

- Berechnen, basierend auf Charakterisierungsdaten oder einem Simulationsmodell des thermischen Antriebsstrangs, der Wirkungsgradwerte des thermischen Antriebsstrangs (EffSysT) als eine Funktion eines Gangs (Gear) und eines Drehmoments (T_ICEd) und einer Anzahl von Umdrehungen (RPM_ICEd) des thermischen Antriebsstrangs, welche sich auf den gemeinsamen Referenzpunkt beziehen;
- Erhalten der zweiten Tabelle (EFF_SYST_map) basierend auf den berechneten Wirkungsgradwerten des thermischen Antriebsstrangs (EffSysT);
- Berechnen, basierend auf Charakterisierungsdaten oder einem Simulationsmodell des elektrischen Antriebsstrangs, der Wirkungsgradwerte des elektrischen Antriebsstrangs (EffSysE) basierend auf jedem Satz von drei Parametern, welcher einen Gang (Gear) und ein Drehmoment (T_EMGd) und eine Anzahl von Umdrehungen (RPM_EMGd) umfasst, welche sich auf den gemeinsamen Referenzpunkt beziehen;
- Berechnen des Gesamtwirkungsgrads des Hybridantriebssystems (EffSysH) als eine Funktion eines Gangs (Gear), eines Drehmoments an dem gemeinsamen Referenzpunkt (Td), einer Anzahl von Umdrehungen an dem gemeinsamen Referenzpunkt (RPMd) und eines Drehmoments des elektrischen Antriebsstrangs an dem gemeinsamen Referenzpunkt (T_EMGd) basierend auf den Wirkungsgradwerten des thermischen Antriebsstrangs (EffSysT) und den berechneten Wirkungsgradwerten des elektrischen Antriebsstrangs (EffSysE);
- für jeden möglichen Betriebszustand, welcher von einem Satz von drei Parametern repräsentiert ist, welcher aus einem Gang (Gear), einem an dem gemeinsamen Referenzpunkt erforderlichen Drehmoment (Td) und einer an dem gemeinsamen Referenzpunkt erforderlichen Anzahl von Umdrehungen (RPMd) gebildet ist, Bestimmen des maximalen Gesamtwirkungsgradwerts des Hybridantriebssystems (EffSysH_max) und Identifizieren des entsprechenden Drehmomentwerts des elektrischen Antriebsstrangs an dem Differenzial (T_EMGd) als das optimale Drehmoment des elektrischen Antriebsstrangs (EM-Trq-Opt) für den jeweiligen Satz von drei Parametern;
- Organisieren der digitalen Daten, welche sich auf das optimale Drehmoment des elektrischen Antriebsstrangs (EM-Trq-Opt) beziehen, für all die Sätze von drei Parametern, welche aus einem Gang (Gear), einem Gesamtdrehmoment an dem gemeinsamen Referenzpunkt (Td) und einer Anzahl von Umdrehungen an dem gemeinsamen Referenzpunkt (RPMd) gebildet sind, um die erste Tabelle (Trq_SYSH_map) zu erhalten.

**7.** Verfahren nach Anspruch 6, wobei der elektrische Antriebsstrang (2) eine Batterie (21), einen Inverter (23) und einen elektrischen Motor (25) umfasst und wobei der Schritt des Berechnens der Wirkungsgradwerte des elektrischen Antriebsstrangs (EffSysE) umfasst:

- Abschätzen eines Batteriewirkungsgrads (Eff_BAT), eines Inverterwirkungsgrads (Eff_INV) und eines Wirkungsgrads des elektrischen Motors (Eff_EMG);
- Multiplizieren des Batteriewirkungsgrads (Eff_BAT), des Inverterwirkungsgrads (Eff_INV) und des Wirkungsgrads des elektrischen Motors (Eff_EMG), um den Wirkungsgrad des elektrischen Antriebsstrangs (EffSysE) zu erhalten.

8. Verfahren nach Anspruch 7, wobei:

- der Wirkungsgrad des elektrischen Motors (Eff_EMG) für jeden Motorbetriebspunkt für jedes Drehmoment, welches an allen möglichen Anzahlen von Umdrehungen pro Zeiteinheit zugeführt werden kann, basierend auf einem Charakterisierungskennfeld des Wirkungsgrads des elektrischen Motors abgeschätzt wird;
- der Inverterwirkungsgrad (Eff_INV) basierend auf der an dem Inverter erforderlichen kontinuierlichen Leistung (P_INV) für jeden Motorbetriebspunkt abgeschätzt wird, wobei die an dem Inverter erforderliche kontinuierliche Leistung (P_INV) basierend auf der an jedem Motorbetriebspunkt erforderlichen Dreiphasenleistung des elektrischen Motors (P_EMG) unter Berücksichtigung eines Verlusts an den Verbindungskabeln (24) zwischen dem Inverter und dem elektrischen Motor abgeschätzt wird und wobei die in jedem Motorbetriebspunkt erforderliche Dreiphasenleistung (P_EMG) basierend auf dem Charakterisierungskennfeld des Wirkungsgrads des elektrischen Motors abgeschätzt wird;
- der Batteriewirkungsgrad (Eff_BAT) basierend auf der an der Batterie erforderlichen elektrischen Leistung (P_BAT) als eine Funktion jedes Werts des Ladezustands (SOC) der Batterie abgeschätzt wird, wobei die an der Batterie erforderliche elektrische Leistung (P_BAT) unter Berücksichtigung der an dem Inverter erforderlichen kontinuierlichen Leistung (P_INV) und dem Verlust an den Verbindungskabeln (22) zwischen der Batterie und dem Inverter abgeschätzt wird.

9. Verfahren nach Anspruch 8, wobei der Batteriewirkungsgrad (Eff_BAT), der Inverterwirkungsgrad (Eff_INV) und der Wirkungsgrad des elektrischen Motors (Eff_EMG) auch unter Berücksichtigung eines ersten Korrekturfaktors, welcher für die Abhängigkeit von der Temperatur repräsentativ ist, und eines zweiten Korrekturfaktors abgeschätzt werden, welcher für Alterungserscheinungen repräsentativ ist.

10. Verfahren nach Anspruch 6, wobei der thermische Antriebsstrang (3) einen thermischen Motor (31), eine Kupplung (32) und ein Getriebe (33) umfasst und wobei der Schritt des Berechnens der Wirkungsgradwerte des thermischen Antriebsstrangs (EffSysT) umfasst:

- Abschätzen eines Wirkungsgrads des thermischen Motors (Eff_ICE), eines Kupplungswirkungsgrads (Eff_CLT) und eines Getriebewirkungsgrads (Eff_GBX);
- Multiplizieren des Wirkungsgrads des thermischen Motors (Eff_ICE), des Kupplungswirkungsgrads (Eff_CLT) und des Getriebewirkungsgrads (Eff_GBX), um den Wirkungsgrad des thermischen Antriebsstrangs (EffSysT) zu erhalten.

11. Verfahren nach Anspruch 10, wobei der Wirkungsgrad des thermischen Motors (Eff_ICE) als das Verhältnis zwischen erzeugter mechanischer Energie und von der Verbrennung des eingespritzten Kraftstoffs herrührender Energie basierend auf Charakterisierungsdaten oder Simulationsmodellen des thermischen Motors abgeschätzt wird.

12. Verfahren nach Anspruch 11, wobei der Wirkungsgrad des thermischen Motors (Eff_ICE) basierend auf dem spezifischen Kraftstoffverbrauch, d. h. dem Parameter BSFC, und auf der Energiedichte des verwendeten Kraftstoffs, d. h. dem Parameter K_E, berechnet wird, gemäß der Formel:

$$Eff_{ICE} = (BSFC \cdot K\_E)^{-1}$$

13. Verfahren nach Anspruch 11, wobei der Kupplungswirkungsgrad (Eff_CLT) basierend auf einem Simulationsmodell der Kupplung oder basierend auf einer Matrix in Funktion einer Temperatur und eines Motorbetriebspunkts berechnet wird oder er auf einen vorbestimmten konstanten Wert festgelegt wird.

14. Verfahren nach Anspruch 11, wobei der Getriebewirkungsgrad (Eff_GBX) basierend auf einem Simulationsmodell des Getriebes oder basierend auf einer Matrix in Funktion einer Temperatur und eines Motorbetriebspunkts berechnet wird oder er auf einen vorbestimmten konstanten Wert festgelegt wird.

15. Verfahren nach Anspruch 6, wobei das Drehmoment an dem gemeinsamen Referenzpunkt (Td) durch die Summe des Drehmoments des elektrischen Antriebsstrangs an dem gemeinsamen Referenzpunkt (T_EMGd) und des Drehmoments des thermischen Antriebsstrangs an dem gemeinsamen Referenzpunkt (T_ICEd) gegeben ist und wobei der Schritt des Berechnens des Gesamtwirkungsgrads des Hybridantriebssystems (EffSysH) durch folgende Formel ausgeführt wird:

$$EffSysH(RPM_d, T_d, Gear, T\_EMG_d) = \frac{T_d}{\left(\frac{T\_EMG_d}{EffSysE} + \frac{T_d - T\_EMG_d}{EffSysT}\right)}$$

## Revendications

1.  Procédé de gestion et de commande du fonctionnement d'un système de propulsion hybride (1) pour véhicules comprenant au moins un groupe motopropulseur électrique (2) et un groupe motopropulseur thermique (3), configurés pour agir dans le système de propulsion directement ou indirectement sur un point de référence commun (4), dans lequel le procédé comprend les étapes de :

    - stockage, dans une unité de commande (5) du système de propulsion (1), de données numériques organisées en un premier tableau (Trq_SYSH_map) configuré pour fournir une valeur de couple optimale de groupe motopropulseur électrique (EM-Trq-Opt) adaptée pour maximiser le rendement total (EffSysH) du système de propulsion, en fonction de paramètres opérationnels du système de propulsion ;
    - stockage, dans l'unité de commande (5) du système de propulsion, d'autres données numériques organisées en un second tableau (EFF_SYST_map) configuré pour fournir une valeur de rendement de groupe motopropulseur thermique (EffSysT) en fonction desdits paramètres opérationnels du système de propulsion ;
    dans lequel lesdits paramètres opérationnels du système de propulsion comprennent le couple (Td) et le nombre de tours par unité de temps (RPMd), se référant audit point de référence commun (4), et la vitesse (Gear), dans lequel ledit couple (Td) est le couple requis total en référence au point de référence commun (4), soit calculé, soit détectable au niveau du point de référence commun (4) ;
    **caractérisé en ce que** le procédé, pendant le fonctionnement du système de propulsion hybride (1), dans n'importe quelle condition opérationnelle requise, exprimée par le biais desdits paramètres opérationnels du système de propulsion, comprend les autres étapes suivantes, réalisées par l'unité de commande (5) du système de propulsion :

    - détermination, en fonction de la condition opérationnelle requise, du rendement du groupe motopropulseur thermique (EffSysT) sur la base dudit second tableau (EFF_SYST_map) ;
    - détection ou réception d'informations concernant une valeur d'état de charge (SOC) actuelle d'une batterie comprise dans le système de propulsion hybride ;
    - détermination, en fonction de l'état de charge (SOC) détecté, d'un seuil de commande opérationnel, représenté par une valeur de rendement de seuil de propulsion thermique (Eff_T_THR), sur la base d'une relation (f) prédéterminée dans laquelle le seuil de commande opérationnel (Eff_T_THR) augmente lorsque l'état de charge (SOC) augmente :
    - comparaison du rendement du groupe motopropulseur thermique (EffSysT) avec le seuil de commande opérationnel (Eff_T_THR) ;
    - si le rendement du groupe motopropulseur thermique (EffSysT) déterminé est supérieur audit seuil de commande opérationnel (Eff_T_THR), arrêt du groupe motopropulseur électrique (2) et commande de l'activation du groupe motopropulseur thermique (3) ;
    - si le rendement du groupe motopropulseur thermique (EffSysT) déterminé est inférieur audit seuil de commande opérationnel (Eff_T_THR), commande de l'activation du groupe motopropulseur électrique (2), de telle manière que le groupe motopropulseur électrique (2) fonctionne avec la valeur stockée du couple optimal de groupe motopropulseur électrique (EM-Trq-Opt) correspondant à la condition opérationnelle requise.

2.  Procédé selon la revendication 1, dans lequel le point de référence commun (4) du groupe motopropulseur électrique (2) et du groupe motopropulseur thermique (3) est le différentiel du véhicule, et dans lequel les paramètres opérationnels du système de propulsion comprennent le couple au différentiel (Td), le nombre de tours au différentiel (RPMd) et la vitesse (Gear).

3.  Procédé selon la revendication 1 ou 2, dans lequel, lorsque l'activation du groupe motopropulseur électrique (2) est commandée, le groupe motopropulseur thermique (3) est arrêté, et le couple total fourni coïncide avec le couple optimal fourni par le groupe motopropulseur électrique (EM-Trq-Opt).

4. Procédé selon la revendication 1 ou 2, dans lequel, lorsque l'activation du groupe motopropulseur électrique (2) est commandée, le groupe motopropulseur thermique (3) est également maintenu activé, et le couple total fourni coïncide avec la somme du couple optimal fourni par le groupe motopropulseur électrique (EM-Trq-Opt) et du couple fourni par le groupe motopropulseur thermique.

5. Procédé selon l'une quelconque des revendications précédentes, dans lequel :

   - le premier tableau stocké est un tableau de « correspondance » correspondant à une matrice tridimensionnelle, dans lequel chaque cellule est définie par un ensemble de trois paramètres, comprenant le couple (Td) et le nombre de tours (RPMd), se référant au point de référence commun, et la vitesse (Gear), utilisée par l'unité de commande (5) en tant qu'entrée de consultation de tableau, et contient la valeur de couple optimale du groupe motopropulseur électrique (EM-Trq-Opt) correspondant à l'ensemble respectif de trois paramètres, qui est fournie en réponse à la consultation du tableau ;
   - le second tableau stocké est un tableau de « correspondance » correspondant à une matrice tridimensionnelle, dans lequel chaque cellule est définie par un ensemble de trois paramètres, comprenant le couple (Td) et le nombre de tours (RPMd), se référant au point de référence commun, et la vitesse (Gear), utilisée par l'unité de commande (5) en tant qu'entrée de consultation de tableau, et contient la valeur de rendement de groupe motopropulseur thermique (EffSysT) correspondant à l'ensemble respectif de trois paramètres, qui est fournie en réponse à la consultation du tableau.

6. Procédé selon l'une quelconque des revendications précédentes, dans lequel le procédé, avant les étapes de stockage, comprend les autres étapes de :

   - calcul, sur la base de données de caractérisation ou d'un modèle de simulation du groupe motopropulseur thermique, des valeurs de rendement de groupe motopropulseur thermique (EffSysT) en fonction de la vitesse (Gear) et du couple (T-ICEd) et du nombre de tours (RPM_ICEd) du groupe motopropulseur thermique, en référence audit point de référence commun ;
   - obtention dudit second tableau (EFF_SYST_map) sur la base des valeurs de rendement de groupe motopropulseur thermique (EffSysT) calculées ;
   - calcul, sur la base de données de caractérisation ou d'un modèle de simulation du groupe motopropulseur électrique, des valeurs de rendement de groupe motopropulseur électrique (EffSysE) sur la base de chaque ensemble de trois paramètres comprenant la vitesse (Gear) et le couple (T_EMGd) et le nombre de tours (RPM_EMGd) du groupe motopropulseur électrique, en référence audit point de référence commun ;
   - calcul du rendement total du système de propulsion hybride (EffSysH), en fonction de la vitesse (Gear), du couple au point de référence commun (Td), du nombre de tours au point de référence commun (RPMd) et du couple du groupe motopropulseur électrique au point de référence commun (T_EMGd), sur la base des valeurs de rendement de groupe motopropulseur thermique (EffSysT) et des valeurs de rendement de groupe motopropulseur électrique (EffSysE) calculées ;
   - pour chaque condition opérationnelle possible, représentée par un ensemble de trois paramètres constitués de la vitesse (Gear), du couple requis au point de référence commun (Td), du nombre de tours requis au point de référence commun (RPMd), détermination de la valeur de rendement totale maximale du système de propulsion hybride (EffSysH_max) et identification de la valeur de couple de groupe motopropulseur électrique correspondante au différentiel (T_EMGd) en tant que couple optimal de groupe motopropulseur électrique (EM-Trq-Opt) pour l'ensemble respectif de trois paramètres ;
   - organisation des données numériques relatives au couple optimal de groupe motopropulseur électrique (EM-Trq-Opt) pour la totalité des ensembles de trois paramètres constitués de la vitesse (Gear), du couple total au point de référence commun (Td), du nombre de tours au point de référence commun (RPMd), de sorte à obtenir ledit premier tableau (Trq_SYSH_map).

7. Procédé selon la revendication 6, dans lequel le groupe motopropulseur électrique (2) comprend une batterie (21), un onduleur (23) et un moteur électrique (25), et dans lequel l'étape de calcul des valeurs de rendement de groupe motopropulseur électrique (EffSysE) comprend :

   - l'estimation d'un rendement de batterie (Eff BAT), d'un rendement d'onduleur (Eff_INV) et d'un rendement de moteur électrique (Eff_EMG) ;
   - la multiplication du rendement de batterie (Eff_BAT), du rendement d'onduleur (Eff_INV) et du rendement de moteur électrique (Eff_EMG), pour obtenir le rendement de groupe motopropulseur électrique (EffSysE).

8. Procédé selon la revendication 7, dans lequel :

- le rendement de moteur électrique (Eff_EMG) est estimé pour chaque point de fonctionnement de moteur, pour chaque couple apte à être délivré à tous les nombres possibles de tours par unité de temps, sur la base d'une carte de caractérisation du rendement de moteur électrique :
- le rendement d'onduleur (Eff_INV) est estimé sur la base de la puissance continue requise au niveau de l'onduleur (P_INV) pour chaque point de fonctionnement de moteur, dans lequel la puissance continue requise au niveau de l'onduleur (P INV) est estimée sur la base de la puissance triphasée du moteur électrique (P_EMG) requise au niveau de chaque point de fonctionnement de moteur en tenant compte d'une perte sur les câbles de connexion (24) entre l'onduleur et le moteur électrique, et dans lequel la puissance triphasée (P_EMG) requise dans chaque point de fonctionnement de moteur est estimée sur la base de ladite carte de caractérisation du rendement de moteur électrique ;
- le rendement de batterie (Eff_BAT) est estimé sur la base de la puissance électrique requise au niveau de la batterie (P_BAT), en fonction de chaque valeur de l'état de charge (SOC) de la batterie, dans lequel la puissance requise au niveau de la batterie (P_BAT) est estimée en tenant compte de la puissance continue requise au niveau de l'onduleur (P_INV) et d'une perte sur les câbles de connexion (22) entre la batterie et l'onduleur.

9. Procédé selon la revendication 8, dans lequel le rendement de la batterie (Eff_BAT), le rendement de l'onduleur (Eff_INV) et le rendement de moteur électrique (Eff_EMG) sont estimés en tenant également compte d'un premier facteur de correction représentatif de la dépendance vis-à-vis de la température et d'un second facteur de correction représentatif d'un phénomène de vieillissement.

10. Procédé selon la revendication 6, dans lequel le groupe motopropulseur thermique (3) comprend un moteur thermique (31), un embrayage (32) et une boîte de vitesses (33), et dans lequel l'étape de calcul des valeurs de rendement de groupe motopropulseur thermique (EffSysT) comprend :

- l'estimation d'un rendement de moteur thermique (Eff_ICE), d'un rendement d'embrayage (Eff_CLT) et d'un rendement de boîte de vitesses (Eff_GBX) ;
- la multiplication du rendement de moteur thermique (Eff_ICE), du rendement d'embrayage (Eff_CLT) et du rendement de boîte de vitesses (Eff_GBX) pour obtenir le rendement de groupe motopropulseur thermique (EffSysT).

11. Procédé selon la revendication 10, dans lequel le rendement de moteur thermique (Eff_ICE) est estimé comme le rapport entre l'énergie mécanique produite et l'énergie dérivée de la combustion du carburant injecté, sur la base de données de caractérisation ou de modèles de simulation du moteur thermique.

12. Procédé selon la revendication 11, dans lequel le rendement de moteur thermique (Eff_ICE) est calculé sur la base de la consommation de carburant spécifique, à savoir, du paramètre BSFC, et de la densité d'énergie du carburant utilisé, à savoir, du paramètre K_E selon la formule :

$$\text{Eff\_ICE} = (\text{BSFC} \cdot \text{K\_E})^{-1}.$$

13. Procédé selon la revendication 11, dans lequel le rendement d'embrayage (Eff_CLT) est calculé sur la base d'un modèle de simulation de l'embrayage, ou sur la base d'une matrice en fonction de la température et du point de fonctionnement de moteur, ou il est fixé à une valeur constante prédéterminée.

14. Procédé selon la revendication 11, dans lequel le rendement d'embrayage (Eff_GBX) est calculé sur la base d'un modèle de simulation de la boîte de vitesses, ou sur la base d'une matrice en fonction de la température et du point de fonctionnement de moteur, ou il est fixé à une valeur constante prédéterminée.

15. Procédé selon la revendication 6, dans lequel le couple au point de référence commun (Td) est fourni par la somme du couple de groupe motopropulseur électrique au point de référence commun (T_EMGd) et du couple de groupe motopropulseur thermique au point de référence commun (T ICEd), et dans lequel l'étape de calcul du rendement total du système de propulsion hybride (EffSysH) est réalisée par le biais de la formule :

$$EffSysH(RPM_d, T_d, Gear, T\_EMG_d) = \frac{T_d}{\left(\dfrac{T\_EMG_d}{EffSysE} + \dfrac{T_d - T\_EMG_d}{EffSysT}\right)}$$

EP 3 505 410 B1

1

Trq_SYSH_map

EFF_SYST_map

5

SOC

31 32 33

3

4

21 22 23 24 25

2

Fig. 1

Fig. 2

Fig. 3

Fig. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8103397 B2
- WO 2011033529 A2
- US 2005256623 A1
- US 2005256631 A1